# FASCICULE DE BREVET EUROPEEN

(11) **EP 1 413 822 B1**
(45) Date de publication et mention de la délivrance du brevet: **30.03.2005**
(21) Numéro de dépôt: 03291665.2
(22) Date de dépôt: 04.07.2003
(51) Int. Cl.: F16P 5/00, F01D 21/04

(54) **Système de découplage par charge explosive d'une soufflante d'un turboréacteur**
Anordnung zur Entkopplung des Bläsers eines Turbostrahltriebwerks mit einer Sprengladung
Uncoupling arrangement of a turbojet engine fan using an explosive charge

(30) Priorité: 23.10.2002 FR 0213203
(43) Date de publication de la demande: 28.04.2004
(73) Titulaire: SNECMA MOTEURS, 75015 Paris (FR)
(72) Inventeur: Binetruy, Gabriel, 77710 Nanteau/Lunain (FR); Desindes, Jean-Marie, 91540 Mennecy (FR); Kervistin, Robert, 77350 Le Mee-sur-Seine (FR)
(74) Mandataire: Joly, Jean-Jacques

(56) Documents cités:
- FR-A- 2 373 698
- FR-A- 2 463 853
- FR-A- 2 709 157
- FR-A- 2 752 024

## Description

### Arrière-plan de l'invention

La présente invention se rapporte au domaine général des systèmes de fixation d'une soufflante d'un turboréacteur. Elle vise plus particulièrement un système de découplage d'une soufflante d'un turboréacteur en cas d'efforts importants sur le support de la soufflante.

Un turboréacteur reçoit en vol de l'air à travers une soufflante. La soufflante permet de comprimer une quantité de cet air qui contribue à la poussée du turboréacteur. Elle se compose d'une pluralité d'aubes qui assurent cette compression et elle est mise en rotation par une turbine via un arbre d'entraînement. Cet arbre d'entraînement est monté sur des paliers qui sont reliés à des parties fixes du turboréacteur.

Il est connu que pour les cas extrêmes tels que la perte d'une aube, un balourd important est généré. Ce balourd engendre des charges cycliques et des vibrations que les paliers de support de l'arbre d'entraînement de la soufflante communiquent aux parties fixes du turboréacteur avec d'importants risques de détérioration.

Afin de se prémunir contre ces dangers, il est généralement possible d'utiliser un système de découplage qui permet de désaccoupler la soufflante des parties fixes du turboréacteur en cas d'efforts importants. Cette solution consiste à soutenir l'arbre d'entraînement de la soufflante par une série de liaisons judicieusement placées et calibrées pour se rompre sous une charge déterminée, la soufflante et son arbre d'entraînement se découplant alors des parties fixes du turboréacteur. Les liaisons sont réalisées par des vis et des écrous dimensionnés pour se rompre par cisaillement ou par flexion. FR-A-2752024 illustre un exemple d'un tel système de découplage.

Un tel système de découplage présente néanmoins de nombreux inconvénients. Il implique notamment une rupture des liaisons par une transmission directe de l'effort radial provenant du balourd de l'arbre d'entraînement de la soufflante, ce qui se traduit par une grande incertitude quant au moment de la rupture des liaisons. En effet, le calcul de la charge de découplage nécessite la prise en compte de nombreux paramètres (notamment les efforts statiques et dynamiques appliqués au turboréacteur) qui évoluent pendant le fonctionnement et la durée de vie du turboréacteur. Ces différents paramètres évolutifs ne sont pas pris en considération par des systèmes classiques de découplage lors du calibrage de la charge de découplage. En outre, dans certaines situations de vol, il est parfois préférable de ne pas découpler la soufflante mais plutôt d'agir sur la poussée du turboréacteur pour rester sous la charge de découplage.

### Objet et résumé de l'invention

La présente invention vise donc à pallier de tels inconvénients en proposant un système fiable de découplage de la soufflante d'un turboréacteur qui permet de supprimer toute incertitude quant au moment de la rupture des liaisons. Elle vise également un système de découplage prenant en compte les contraintes statiques et dynamiques appliquées au turboréacteur afin d'anticiper, voire d'éviter, des fonctionnements critiques du turboréacteur.

A cet effet, il est prévu un système de découplage d'une soufflante d'un turboréacteur, comprenant un arbre mobile de soufflante monté sur des paliers reliés chacun à une structure fixe du turboréacteur par des supports de paliers, les supports de palier étant fixés à la structure fixe du turboréacteur par des liaisons mécaniques assurant le passage des efforts engendrés par la rotation de la soufflante lors du fonctionnement normal du turboréacteur, le système de découplage étant caractérisé en ce que les liaisons mécaniques comportent des charges explosives permettant de provoquer une rupture des liaisons, les charges explosives étant commandées par un calculateur électronique pleine autorité à partir de moyens de mesure de contraintes mécaniques du turboréacteur et d'un modèle de calculs simulant le comportement statique, dynamique et thermodynamique du turboréacteur.

Avantageusement, le système de découplage comporte en outre un calculateur relié aux moyens de mesure permettant de représenter le comportement statique, dynamique et thermodynamique du turboréacteur en fonction d'une modélisation du comportement et de mesures des contraintes mécaniques du turboréacteur, le calculateur étant relié au calculateur électronique pleine autorité afin de commander une rupture des liaisons en fonction du comportement statique, dynamique et thermodynamique du turboréacteur. Ce calculateur permet ainsi de connaître en temps réel le niveau de sollicitation des pièces sensibles du turboréacteur pendant les différentes phases de fonctionnement de celui-ci et de transmettre ces données au calculateur électronique pleine autorité.

De la sorte, le découplage de la soufflante du turboréacteur s'effectue, non pas sous une charge pré-calibrée, mais par explosion d'une charge déclenchée par le calculateur électronique pleine autorité de l'avion sur informations de mesures appropriées et de données caractéristiques du fonctionnement du turboréacteur. Toute incertitude sur le moment du déclenchement de la charge provoquant la rupture des liaisons est donc supprimée.

Les charges explosives comportent chacune un détonateur à commande électrique ou optique qui peut être intégré à la liaison mécanique. Les charges explosives peuvent être des poudres explosives ou des capsules de gaz sous pression.

Les moyens de mesure des contraintes mécaniques du moteur comportent l'un ou plusieurs des capteurs suivants : capteurs de pression, capteurs de température, capteurs de déplacements et capteurs de vibrations.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle d'un turboréacteur en coupe longitudinale ; et
- la figure 2 est une vue schématique du système de découplage selon l'invention.

### Description détaillée d'un mode de réalisation

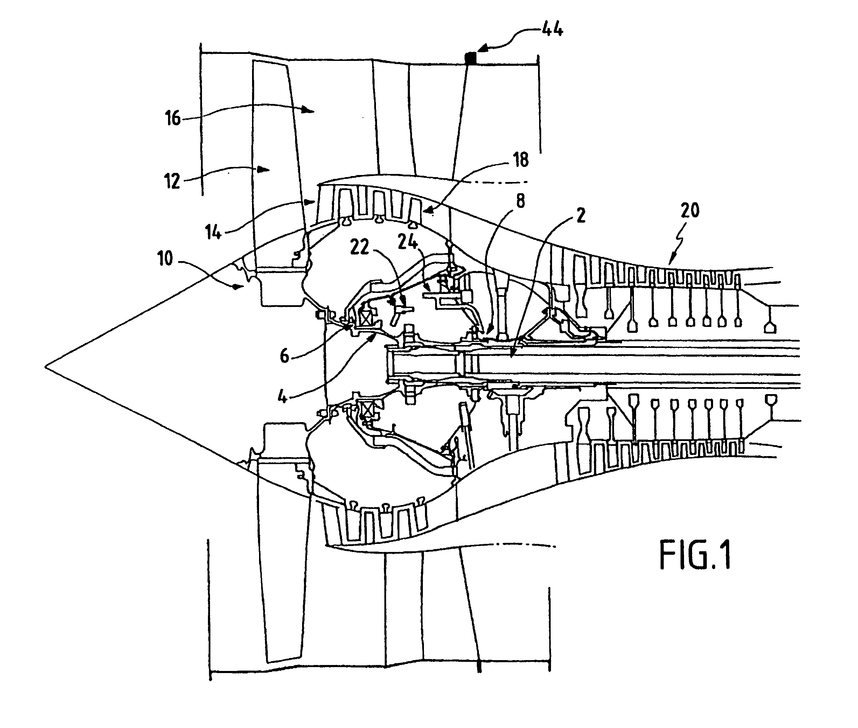

On se réfère tout d'abord à la figure 1 qui représente partiellement et en coupe longitudinale un turboréacteur.

Le turboréacteur est notamment constitué d'un arbre basse pression 2, et plus précisément d'un arbre d'entraînement de soufflante 4 monté sur un palier avant 6 et un palier arrière 8. Cet arbre 4 supporte, à une extrémité avant, une soufflante 10 munie d'une pluralité d'aubes 12 qui s'étendent radialement devant l'entrée d'une veine interne 14 d'écoulement des gaz et l'entrée d'une veine externe 16 entourant la veine interne. Le turboréacteur comporte en outre, au niveau de la veine interne 14, un compresseur basse pression 18 et un compresseur haute pression 20 situé en aval du précédent. Des conduits de lubrification 22, 24 reliés à des pompes (non représentées) permettent d'injecter de l'huile au niveau des paliers 6, 8.

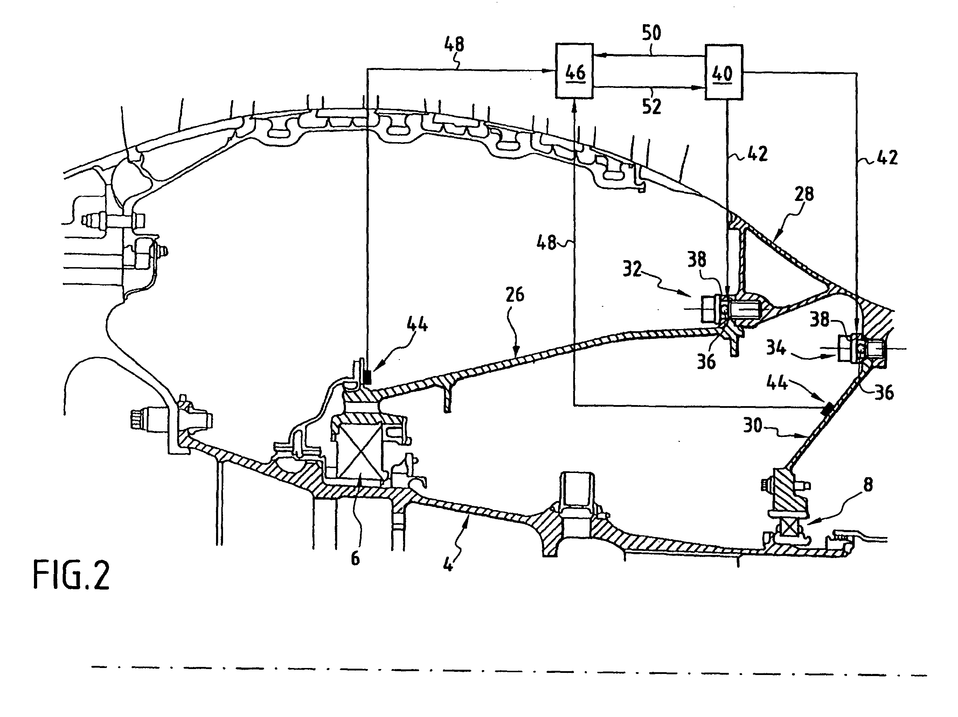

Sur la figure 2, on voit que le palier avant 6 est soutenu par un support de palier avant 26 qui est relié à une structure fixe 28 du turboréacteur. De même, le palier arrière 8 est soutenu par un support de palier arrière 30 qui est également relié à la structure fixe 28. Les supports de palier avant et arrière sont reliés à la structure fixe 28 du turboréacteur, par l'intermédiaire de liaisons mécaniques à vis, respectivement 32, 34. Ces liaisons mécaniques permettent d'assurer le passage des efforts engendrés par la rotation de la soufflante lors du fonctionnement normal du turboréacteur.

Selon l'invention, les liaisons mécaniques 32 et 34 entre la structure fixe 28 et les supports de palier avant 26 et arrière 30 comportent chacune un système de découplage. Ce système de découplage comporte notamment une cavité 36 aménagée dans les vis 32 et 34. Cette cavité est remplie d'une charge pyrotechnique. La charge pyrotechnique est une composition chimique de type connu qui se présente par exemple sous la forme d'une poudre explosive ou d'un gaz explosif. La charge pyrotechnique peut aussi être une capsule de gaz sous pression susceptible d'exploser sous l'action d'un détonateur. Cette charge explosive est dosée de façon à pouvoir provoquer la rupture des vis 32, 34. Un détonateur 38 (ou allumeur) à commande électrique ou optique de type connu est également prévu afin de provoquer l'explosion de la charge pyrotechnique. Ce détonateur peut être intégré directement aux vis 32, 34 comme représenté sur la figure 2.

Le détonateur 38 de la charge explosive est commandé directement par un calculateur électronique pleine autorité 40 communément dénommé FADEC (Full Authority Digital Engine Control) par l'intermédiaire d'une liaison 42 électrique ou optique. Ce calculateur 40 est un boîtier électronique de type connu qui permet de contrôler la gestion du turboréacteur et d'assurer ainsi la sécurité de l'avion en prévenant des dégâts sérieux sur le turboréacteur. Selon l'invention, le calculateur électronique pleine autorité permet également de déclencher les détonateurs 38 des charges explosives équipant les liaisons mécaniques 32, 34 entre la structure fixe 28 du turboréacteur et les supports de paliers avant 26 et arrière 30. Ce déclenchement des charges explosives est réalisé à partir de mesures de contraintes mécaniques (statiques et dynamiques) du turboréacteur relevées sur celui-ci, et à partir d'une modélisation du comportement statique, dynamique et thermodynamique du turboréacteur.

Les mesures des contraintes statiques et dynamiques sont réalisées par des appareils de mesure 44 au niveau des pièces du turboréacteur qui sont les plus sensibles aux différentes sollicitations mécaniques. Par exemple, les pièces les plus sensibles aux sollicitations sont les supports de palier 26 et 30. Les appareils de mesures sont des capteurs de type connu qui permettent de mesurer, au niveau de ces pièces, différents paramètres du turboréacteur en fonctionnement et notamment : le régime de rotation de la soufflante 10, les pressions et températures à l'intérieur du turboréacteur, les déplacements relatifs de la soufflante par rapport aux parties fixes du moteur et les vibrations de la structure du moteur. Des capteurs 44 de type accéléromètre sont représentés à titre d'exemple sur les figures 1 et 2. Sur la figure 1, le capteur 44 est positionné sur le carter d'échappement du moteur et sur la figure 2, les capteurs 44 sont disposés au niveau des supports de palier 26 et 30. Les capteurs proviennent d'une technologie classique ou d'une micro technologie, cette dernière technologie présentant l'avantage de pouvoir obtenir un plus grand nombre d'informations par unité de surface.

Les appareils de mesure 44 transmettent les mesures des contraintes mécaniques ainsi effectuées à un calculateur embarqué 46. Les liaisons 48 s'effectuent par fils ou bien par radio lorsque les capteurs proviennent de la micro technologie. Le calculateur 46 a pour objet de représenter le comportement du turboréacteur sous l'aspect mécanique en termes d'efforts statiques et dynamiques, et sous l'aspect thermodynamique en fonction des mesures des contraintes réalisées par les appareils de mesure 44 et en fonction d'une modélisation de comportement du turboréacteur. La modélisation s'effectue à partir des mesures des contraintes mécaniques et de données thermodynamiques transmises par le calculateur électronique pleine autorité 40 vers le calculateur 46 (liaison 50). Elle permet de simuler le comportement du turboréacteur sous les aspects mécaniques (efforts statiques et dynamiques) et thermodynamiques. Elle peut être de type analytique ou de type en éléments finis. Une modélisation analytique correspond à une modélisation obtenue à partir de données expérimentales ou issues de modèles de calculs du comportement du turboréacteur et dont les résultats sont mis sous forme analytique pour leur exploitation. Une modélisation en éléments finis peut être réalisée en deux ou trois dimensions. A chaque élément du turboréacteur est associée une charge de déformation. Ainsi, à partir des données fonctionnelles du turboréacteur (régime de rotation, poussée, températures, pressions...), la modélisation permet notamment de calculer les efforts statiques et dynamiques de chaque élément sensible du turboréacteur, et en particulier du support de la soufflante, quelles que soient les conditions de fonctionnement du turboréacteur.

Le calculateur 46 est relié au calculateur électronique pleine autorité 40 afin de lui transmettre (liaison 52) la représentation du comportement statique, dynamique et thermodynamique du turboréacteur. De la sorte, le calculateur 46 permet, à partir des mesures effectuées par les appareils 44, de détecter un éventuel balourd, d'analyser la cause de ce balourd à partir de lois préétablies lors de sa conception (par exemple en fonction d'un pourcentage de matière perdue sur une aube de soufflante), de prévoir une nouvelle répartition des charges dans le turboréacteur et de renseigner le calculateur électronique pleine autorité 40 de l'atteinte d'une valeur critique et des moyens pour la réduire. Pour ce faire, le calculateur électronique pleine autorité pourra soit informer le pilote de l'avion afin qu'il agisse directement sur les paramètres du turboréacteur (par exemple sur la poussée) si une situation fonctionnelle de celui-ci est acceptable selon les besoins instantanés et prévisibles de l'avion, soit autoriser le dépassement de la charge limite pendant un temps limité sans déclencher le découplage, soit commander directement l'allumage des charges explosives des liaisons 32, 34 si aucune situation fonctionnelle du turboréacteur acceptable n'est envisageable.

La commande par le calculateur électronique pleine autorité de la rupture des liaisons en fonction des mesures des contraintes statiques et dynamiques et d'une modélisation du comportement statique, dynamique et thermodynamique du turboréacteur présente de nombreux avantages. Elle permet ainsi d'anticiper, voire d'éviter, des fonctionnements critiques du turboréacteur dans les situations délicates suivantes :
- au moment du décollage de l'avion, en cas de perte d'une partie d'une aube de soufflante (après ingestion d'un oiseau par exemple), il est en général préférable, pour des raisons de sécurité, de ne pas découpler la soufflante. Dans cette situation, le système de découplage selon l'invention permet d'informer le pilote de la nécessité de réduire un peu la poussée du turboréacteur afin de rester sous la charge critique tandis qu'un système de découplage classique aurait déjà découplé la soufflante ;
- sur l'ensemble des conditions de vol, le système de découplage selon l'invention permet, par sa capacité d'adaptation (niveau de découplage et action sur le pilotage du turboréacteur), d'optimiser la poussée du turboréacteur en fonction des évènements. Il est ainsi possible d'éviter une situation délicate de l'avion:
   * soit en ne provoquant pas le découplage de la soufflante et en limitant le régime du turboréacteur en dessous de la valeur limite correspondant à la charge de découplage si le besoin en poussée pour l'avion le permet,
   * soit, en fonction des besoins en poussée pour l'avion, de maintenir à des régimes et des charges élevées, voire supérieures à la valeur limite de découplage, pour permettre au pilote de réaliser la manoeuvre délicate de l'avion, un indicateur de disfonctionnement lui indiquant qu'une opération de maintenance sera ultérieurement nécessaire ;
- en cas de perte d'une aube de soufflante par les deux turboréacteurs d'un bimoteur (suite à l'ingestion d'oiseaux par les deux turboréacteurs, par exemple) qui pourrait provoquer le découplage sur les deux turboréacteurs avec un système classique de découplage, le système selon invention permet de retarder le découplage de la soufflante du deuxième turboréacteur pour optimiser la poussée résiduelle pendant la phase de vol délicate.

## Revendications

1. Système de découplage d'une soufflante (10) d'un turboréacteur, comprenant un arbre mobile de soufflante (4) monté sur des paliers (6, 8) reliés chacun à une structure fixe (28) du turboréacteur par des supports de paliers (26, 30), lesdits supports de palier étant fixés à ladite structure fixe du turboréacteur par des liaisons mécaniques (32, 34) assurant le passage des efforts engendrés par la rotation de la soufflante lors du fonctionnement normal du turboréacteur, ledit système de découplage étant **caractérisé en ce que** lesdites liaisons mécaniques comportent des charges explosives permettant de provoquer une rupture desdites liaisons, lesdites charges explosives étant commandées par un calculateur électronique pleine autorité (40) à partir de moyens (44) de mesure de contraintes mécaniques du turboréacteur et d'un modèle de calculs (46) simulant le comportement statique, dynamique et thermodynamique du turboréacteur.

2. Système de découplage selon la revendication 1, **caractérisé en ce qu'**il comporte un calculateur (46) relié aux moyens (44) de mesure permettant de représenter le comportement statique, dynamique et thermodynamique du turboréacteur en fonction d'une modélisation dudit comportement et desdites mesures de contraintes mécaniques du turboréacteur, ledit calculateur étant relié audit calculateur électronique pleine autorité (40) afin de commander une rupture desdites liaisons en fonction dudit comportement statique, dynamique et thermodynamique du turboréacteur.

3. Système de découplage selon l'une des revendications 1 et 2, **caractérisé en ce que** lesdites charges explosives comportent chacune un détonateur (38) intégré à ladite liaison mécanique.

4. Système de découplage selon la revendication 3, **caractérisé en ce que** lesdits détonateurs (38) sont à commande électrique.

5. Système de découplage selon la revendication 3, **caractérisé en ce que** lesdits détonateurs (38) sont à commande optique.

6. Système de découplage selon l'une quelconque des revendications 1 à 5, **caractérisé en ce que** lesdites charges explosives sont des poudres explosives.

7. Système de découplage selon l'une quelconque des revendications 1 à 5, **caractérisé en ce que** lesdites charges explosives sont des capsules à gaz sous pression.

8. Système de découplage selon l'une quelconque des revendications 1 à 7, caractérisé en ce lesdits moyens (44) de mesure des contraintes mécaniques du moteur comportent l'un ou plusieurs des capteurs suivants : capteurs de pression, capteurs de température, capteurs de déplacements et capteurs de vibrations.

## Patentansprüche

1. System zum Entkoppeln eines Gebläses (10) eines Turbostrahltriebwerks, enthaltend eine bewegliche Gebläsewelle (4), die auf Lagern (6, 8) angebracht ist, welche jeweils durch Lagerträger (26, 30) mit einer festen Struktur (28) des Turbostrahltriebwerks verbunden sind, wobei die Lagerträger über mechanische Verbindungen (32, 34), welche den Durchgang der durch die Rotation des Gebläses während des normalen Betriebs des Turbostrahltriebwerks erzeugten Kräfte sicherstellen, an der festen Struktur des Turbostrahltriebwerks befestigt sind, wobei das System zum Entkoppeln **dadurch gekennzeichnet ist, daß** die mechanischen Verbindungen Sprengladungen enthalten, die ermöglichen, eine Unterbrechung der Verbindungen zu bewirken, wobei die Sprengladungen anhand von Mitteln (44) zum Messen mechanischer Spannungen des Turbostrahltriebwerks und eines Berechnungsmodells (46), welches das statische, dynamische und thermodynamische Verhalten des Turbostrahltriebwerks simuliert, durch einen Vollautoritäts-Elektronikrechner (40) gesteuert werden.

2. System zum Entkoppeln nach Anspruch 1, **dadurch gekennzeichnet, daß** es einen mit den Mitteln (44) zum Messen verbundenen Rechner (46) enthält, der ermöglicht, das statische, dynamische und thermodynamische Verhalten des Turbostrahltriebwerks in Abhängigkeit von einer Modellbildung des Verhaltens und den Messungen mechanischer Spannungen des Turbostrahltriebwerks darzustellen, wobei der Rechner mit dem Vollautoritäts-Elektronikrechner (40) verbunden ist, um eine Unterbrechung der Verbindungen in Abhängigkeit von dem statischen, dynamischen und thermodynamischen Verhalten des Turbostrahltriebwerks zu steuern.

3. System zum Entkoppeln nach einem der Ansprüche 1 und 2, **dadurch gekennzeichnet, daß** die Sprengladungen jeweils einen Zünder (38) enthalten, der in die mechanische Verbindung integriert ist.

4. System zum Entkoppeln nach Anspruch 3, **dadurch gekennzeichnet, daß** die Zünder (38) elektrisch gesteuert werden.

5. System zum Entkoppeln nach Anspruch 3, **dadurch gekennzeichnet, daß** die Zünder (38) optisch gesteuert werden.

6. System zum Entkoppeln nach irgendeinem der Ansprüche 1 bis 5, **dadurch gekennzeichnet, daß** die Sprengladungen Sprengpulver sind.

7. System zum Entkoppeln nach irgendeinem der Ansprüche 1 bis 5, **dadurch gekennzeichnet, daß** die Sprengladungen Druckgaskapseln sind.

8. System zum Entkoppeln nach irgendeinem der Ansprüche 1 bis 7, **dadurch gekennzeichnet, daß** die Mittel (44) zum Messen der mechanischen Spannungen des Motors einen oder mehrere der folgenden Fühler aufweisen: Druckfühler, Temperaturfühler, Aufnehmer für Bewegungen und Schwingungsfühler.

## Claims

1. A system for decoupling a fan (10) of a turbojet, the turbojet including a moving fan shaft (4) mounted on bearings (6, 8) each connected to a stationary structure (28) of the turbojet by bearing supports (26, 30), said bearing supports being fixed to said stationary structure of the turbojet via mechanical links (32, 34) serving, during normal operation of the turbojet, to transmit the forces generated by rotation of the fan, said decoupling system being **characterised in that** said mechanical links include explosive charges enabling said links to be broken, said explosive charges being controlled by a full authority digital engine control (FADEC) computer (40) on the basis of means (44) for measuring the mechanical stresses in the turbojet and of a computer model (46) simulating the static, dynamic, and thermodynamic behaviour of the turbojet.

2. A decoupling system according to claim 1, **characterised in that** it includes a computer (46) connected to the measurement means (44) to obtain a representation of the static, dynamic, and thermodynamic behaviour of the turbojet as a function of a model of said behaviour and as a function of said measurements of mechanical stresses of the turbojet, said computer being connected to said full authority digital engine control (FADEC) computer (40) to cause said links to break as a function of said static, dynamic, and thermodynamic behaviour of the turbojet.

3. A decoupling system according to claim 1 or claim 2, **characterised in that** each of said explosive charges includes a detonator (38) integrated in said mechanical link.

4. A decoupling system according to claim 3, **characterised in that** said detonators (38) are electrically controlled.

5. A decoupling system according to claim 3, **characterised in that** said detonators (38) are optically controlled.

6. A decoupling system according to any one of claims 1 to 5, **characterised in that** said explosive charges are explosive powders.

7. A decoupling system according to any one of claims 1 to 5, **characterised in that** said explosive charges are capsules of gas under pressure.

8. A decoupling system according to any one of claims 1 to 7, **characterised in that** said means (44) for measuring mechanical stresses of the engine comprise one or more of the following sensors: pressure sensors; temperature sensors; displacement sensors; and vibration sensors.
